# EUROPÄISCHE PATENTANMELDUNG

(11) **EP 3 772 387 A2**
(43) Veröffentlichungstag der Anmeldung: **10.02.2021**
(21) Anmeldenummer: 20187740.4
(22) Anmeldetag: 24.07.2020
(51) Int. Cl.: B23D 61/18, B28D 1/12

(54) **SEILSÄGE MIT SCHNEIDELEMENTEN MIT GEOMETRISCH BESTIMMTER SCHNEIDE UND VERFAHREN ZUR HERSTELLUNG DER SEILSÄGE**

(30) Priorität: 08.08.2019 DE 102019121435
(71) Anmelder: Universität Kassel, 34125 Kassel (DE)
(72) Erfinder: KRÖGER, Jonas, 34369 Hofgeismar (DE); AHSAN, Ammar, 34121 Kassel (DE); BÖHM, Stefan, 38179 Schwülper (DE)
(74) Vertreter: Patentanwälte Walther Hinz Bayer PartGmbB

(57) **Zusammenfassung**

Gegenstand der Erfindung ist eine Seilsäge (100) mit einem Sägeseil (1), auf dem in Abständen zueinander mehrere Schneidelemente (2) angeordnet sind, die einen ringförmigen Grundkörper (10) aufweisen, an dem wenigstens eine geometrisch bestimmte Schneide (11) ausgebildet ist. Erfindungsgemäß ist im ringförmigen Grundkörper (10) eine zentrale Durchgangsöffnung (12) vorgesehen, über die der Grundkörper (10) auf dem Außenumfang (13) des Sägeseiles (1) unmittelbar aufgenommen ist. Weiterhin betrifft die Erfindung ein Verfahren zur Herstellung einer Seilsäge (100) mit einem Sägeseil (1).

## Beschreibung

Die Erfindung betrifft eine Seilsäge mit einem Sägeseil, auf dem in Abständen zueinander mehrere Schneidelemente angeordnet sind, die einen ringförmigen Grundkörper aufweisen, an dem wenigstens eine geometrisch bestimmte Schneide ausgebildet ist. Schneidelemente werden häufig auch als Schneidperlen bezeichnet, die entweder als Einzelteil ausgebildet oder diese weisen wiederum einen Trägerkörper mit wenigstens einem Schneidelement auf.

### STAND DER TECHNIK

Seilsägen dienen zum Sägen beispielsweise von Naturstein oder Beton, und diese weisen als Grundbestandteil ein Sägeseil auf, insbesondere ein Stahlseil, und auf dem Sägeseil sind in regelmäßigen Abständen zueinander Schneidelemente angeordnet, die in Kontakt mit dem zu sägenden Werkstück gebracht werden können. Die Schneidelemente werden hierfür durch die Schnittfuge gezogen, und die Schneidelemente weisen abrasiv wirkende Abschnitte mit in der Regel geometrisch unbestimmten Schneiden auf.

Diese Schneidelemente mit unbestimmter Schneide sind zumeist aus einem Sinterwerkstoff hergestellt, und in einer Verbundmatrix befinden sich Hartstoffe, beispielsweise Polykristalliner Diamant oder Körner aus kubischem Bohrnitrit. Die abrasiv wirkenden Oberflächen befinden sich in der Regel auf der Mantelfläche der im Wesentlichen zylinderförmigen Schneidelemente, und durch eine Vorschubkraft des Sägeseils in Schnittrichtung werden die abrasiv wirkenden Oberflächen in Kontakt mit dem Werkstück gebracht, um die Sägewirkung aufgrund der Abrasion der Schneidelemente mit dem Werkstoff des Werkstückes zu erzielen.

Beispielsweise offenbaren die DE 40 38 480 A1, die CN 206084004 U, die EP 0 486 238 A2 und die KR 100583474 B1 jeweils Ausführungsbeispiele von Seilsägen mit einem Sägeseil, auf dem in Abständen zueinander mehrere Schneidelemente angeordnet sind, die entweder an sich oder in Form von Einsätzen abrasiv wirkende Einsätze oder Abschnitte mit geometrisch unbestimmter Schneide aufweisen.

Neuere Formen von Seilsägen besitzen ein Sägeseil, auf dem in Abständen zueinander mehrere Schneidelemente angeordnet sind, die einen ringförmigen Grundkörper aufweisen, an dem wenigstens eine geometrisch bestimmte Schneide ausgebildet ist. Der ringförmige Grundkörper ist hierfür auf einem Trägerkörper aufgenommen, der wiederum auf dem Sägeseil aufgebracht ist.

So offenbart beispielsweise die DE 10 2015 109 432 B3 eine Seilsäge mit einem Sägeseil und einer Anzahl von Schneidelementen, die eine geometrisch bestimmte Schneide aufweisen. Die Schneidelemente sind auf Trägerkörper aufgebracht, und die Trägerkörper sind wiederum auf dem Außenumfang des Sägeseils befestigt. Die Schneidelemente besitzen auf der Vorderseite in Bewegungsrichtung des Sägeseils eine umlaufende geometrisch bestimmte Schneide in Form einer eine Frontfläche umlaufend begrenzenden Schneidkante, wobei zusätzlich auf dem Außenumfang des Trägerkörpers ein Bereich mit einer geometrisch unbestimmten Schneide ausgebildet ist.

Die Schneidelemente können aus Diamant gebildet sein, beispielsweise Polykristalliner Diamant oder Monokristalliner Diamant. Dabei wird angegeben, dass der Diamant auf eine geeignete Unterlage gesintert sein kann, der ein Trägermaterial oder einen Trägerkörper bildet, sodass der Diamant beispielsweise auf eine Hartmetallunterlage aufgesintert ist. Dieses so gebildete ringförmige Schneidelement wird sodann auf einen Sockelbereich des Trägerkörpers gefügt, beispielsweise mittels Kleben, Schweißen, Löten oder Pressen.

Bei Schneidelementen mit geometrisch bestimmter Schneide muss eine korrekte Ausrichtung der Schneide relativ zur Schneidrichtung sichergestellt sein, in die das Sägeseil und damit auch die Schneidelemente bewegt werden. Der Aufbau einer solchen Schneidperle mit einem Trägerkörper und mit auf dem Trägerkörper angeordneten ringförmigen Schneidelementen ist in der Herstellung aufwendig, und es sind mehrere Fügeschritte notwendig, um eine Schneidperle fertigzustellen, die schließlich auf die vorgegebene Position auf dem Sägeseil aufgebracht werden muss.

Eine genaue Ausrichtung der abrasiv aktiven Oberflächen bei Schneidperlen mit geometrisch unbestimmter Schneide sind keine so hohen Anforderungen gesetzt, jedoch haben Seilsägen mit Schneidelementen, die eine geometrisch unbestimmte Schneide aufweisen, den Nachteil, dass nur verhältnismäßig kleine Vorschübe und Schnittgeschwindigkeiten realisiert werden können.

### OFFENBARUNG DER ERFINDUNG

Die Aufgabe der Erfindung ergibt sich damit aus dem Stand der Technik, die vorstehend aufgeführten Nachteile zu überwinden und insbesondere einen einfachen Aufbau eines Sägeseils vorzuschlagen, bei dem die Schneidelemente auf einfache Weise hergestellt und auf das Sägeseil aufgebracht werden können, die jedoch hinreichend genau auf dem Sägeseil positioniert werden können, um mit einer geometrisch bestimmten Schneide ausgebildet zu werden.

Diese Aufgabe wird ausgehend von einer Seilsäge gemäß dem Oberbegriff des Anspruches 1 und ausgehend von einem Verfahren gemäß dem Oberbegriff des Anspruches 12 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass im ringförmigen Grundkörper des Schneidelementes eine zentrale Durchgangsöffnung vorgesehen ist, über die der Grundkörper auf dem Außenumfang des Sägeseiles unmittelbar aufgenommen ist.

Kerngedanke der Erfindung ist die Bereitstellung eines Schneidelementes aus entsprechend hartem Werkstoff, und das Schneidelement wird mit seinem Grundkörper frei von weiteren Halteelementen direkt auf dem Sägeseil aufgenommen. Damit ergibt sich der Vorteil eines einfachen Aufbaus des Sägeseils ohne die Verwendung von Trägerkörpern, auf dem die Schneidelemente separat aufgebracht werden müssen.

Mit Vorteil ist hierfür die Durchgangsöffnung im Grundkörper mit einem Innendurchmesser ausgebildet, der an den Außendurchmesser des Sägeseiles so angepasst ist, dass der Grundkörper auf dem Außenumfang des Sägeseiles haltend aufgenommen ist.

Das Sägeseil ist in der Regel kein Längskörper mit einer glatten Außenumfangsfläche und es können insbesondere bei einem Stahlseil Topographien auf dem Außenumfang vorherrschen, die ein kontaktierendes Aufbringen des Schneidelementes auch mit einem teilweisen Spalt ermöglichen. Beispielsweise kann die Durchgangsöffnung des Sägeseils mit einem Innendurchmesser ausgeführt sein, der 1% bis 20% und/oder 5% bis 15% und/oder 10% größer ist als der Außendurchmesser des Sägeseiles.

Insbesondere dadurch, dass der Grundkörper frei von weiteren Halteelementen auf dem Sägeseil angeordnet wird, kann vorgesehen sein, dass in einem zwischen dem Innendurchmesser der Durchgangsöffnung und dem Außendurchmesser des Sägeseils gebildeter Ringspalt eine Verbindungsmasse eingespritzt wird, nachdem das Schneidelement auf dem Sägeseil aufgebracht wurde. Eine solche Verbindungsmasse, beispielsweise ein Kunststoff, kann im Spritzgussprozess in den Ringspalt eingespritzt werden, sodass zur Bildung des Ringspaltes die Durchmesserdifferenz zwischen dem Innendurchmesser und dem Außendurchmesser vorteilhaft ist.

Insoweit können Schneidelemente gemäß der Erfindung derart auf dem Sägeseil gesichert werden, dass diese auch im Eingriff mit dem Werkstück ihre geforderte Position nicht verlässt und die geometrisch bestimmte Schneide ordnungsgemäß mit dem Werkstück in Kontakt gelangt. Die Schneidelemente sind damit in Schneidrichtung des Sägeseils und auch in Umfangsrichtung fest, insbesondere unbeweglich und damit gut ausgerichtet auf dem Sägeseil angeordnet.

Zwischen den Schneidelementen können Hülsenelemente oder Federn angeordnet sein. Dabei umgeben die Federn oder Hülsenelemente das Sägeseil. Dadurch wird ein Schaden an dem Sägeseil durch direkten Kontakt des Sägeseils mit dem Werkstück vermieden.

Der Grundkörper zur ausschließlichen Bildung des Schneidelementes weist mit Vorteil einen Basiskörper und einen Schneidkörper auf, und der Basiskörper und der Schneidkörper bilden den Grundkörper einteilig aus. Der Schneidkörper kann mit weiterem Vorteil in Schneidrichtung vor dem Basiskörper liegen und eine kleinere Dicke aufweisen als der Basiskörper. Beispielsweise weist der Basiskörper eine Härte von wenigstens 1500 HV auf und/oder der Schneidkörper weist eine Härte von wenigstens 4500 HV auf. Es hat sich als vorteilhaft erwiesen, wenn der Basiskörper einen Wolfram-Carbid-Sinterwerkstoff aufweist und/oder wenn der Schneidkörper einen Polykristallinen Diamanten aufweist.

Zur Herstellung des Grundkörpers kann zur Erreichung eines weiteren Vorteils vorgesehen sein, dass der Basiskörper und der Schneidkörper in einem gemeinsamen Sinterprozess hergestellt werden, um einen separaten Fügeschritt zwischen den beiden Körpern zu vermeiden. Das Verfahren zur Herstellung des Schneidelementes kann weiterhin vorsehen, dass der Basiskörper und der Schneidkörper bei einer Temperatur von 1.200 °C bis 1.400 °C und/oder bei einem Druck von etwa oder mehr als 4 GPa gemeinsam gesintert werden.

Um eine optimale Schneidwirkung der geometrisch bestimmten Schneide zu erzielen, weist der ringförmige Grundkörper des Schneidelementes eine kegelförmige Außenumfangsfläche auf, und der Kegelwinkel der kegelförmigen Außenumfangsfläche zur Mittelachse besitzt insbesondere einen Wert von 1° bis 12°. Der Grundkörper zur Bildung des Schneidelementes besitzt damit im Unterschied zu üblichen Schneidperlen mit geometrisch unbestimmter Schneide die Form eines Kegelstumpfes mit einer im Wesentlichen planen Frontseite und Rückseite, wobei der Grundkörper im Bereich des größeren Durchmessers des Kegelstumpfes den Schneidkörper aus beispielsweise Polykristallinem Diamanten aufweist und im hinteren, kleineren Durchmesserbereich des Kegelstumpfes weist der Grundkörper den Basiskörper auf, der beispielsweise aus einem Wolfram-Carbid-Sinterwerkstoff gebildet ist und damit den Trägerkörper für den eigentlichen Schneidkörper bildet. Diese beiden Körper, also der Basiskörper und der Schneidkörper, besitzen unmittelbar die Durchgangsöffnung, durch die das Sägeseil hindurchgeführt ist, sodass der Basiskörper und der Schneidkörper mit ihrer Innenseite direkt auf dem Sägeseil aufsitzen.

Der kegelstumpfartige Grundkörper kann eine plan ausgebildete Frontfläche und eine plan ausgebildete rückseitige Fläche besitzen, wobei die Frontfläche unter Bildung der Schneide, die insbesondere ringförmig umlaufend ausgebildet ist, übergeht in die kegelförmige Außenumfangsfläche.

Gemäß einem weiteren Ausführungsbeispiel weist der Grundkörper eine die geometrisch bestimmte Schneide mitbestimmende Frontfläche auf, in der angrenzend an die Schneide eine insbesondere umlaufende Fase eingebracht ist. Die Fase kann einen Fasenwinkel aufweisen, der sich zwischen der Fläche der Fase und der Frontfläche ergibt und einen Wert von 0,1° bis 25° besitzt.

Die Erfindung richtet sich weiterhin auf ein Verfahren zur Herstellung einer Seilsäge mit einem Sägeseil, auf dem in Abständen zueinander mehrere Schneidelemente angeordnet werden, die einen ringförmigen Grundkörper aufweisen, an dem wenigstens eine geometrisch bestimmte Schneide ausgebildet ist. Das Verfahren weist dabei wenigstens die folgenden Schritte auf: Bereitstellen der Schneidelemente mit einem ringförmigen Grundkörper mit einer zentralen Durchgangsöffnung und direktes Anordnen der Schneidelemente auf dem Sägeseil, sodass die Schneidelemente haltend auf dem Sägeseil aufgenommen sind. Die direkte Anordnung des Schneidelementes auf dem Sägeseil ist im vorliegenden Sinn so zu verstehen, dass die Anordnung ohne Zuhilfenahme weiterer Halteelemente erfolgt, und das Schneidelement, aufweisend beispielsweise einen Basiskörper und einen Schneidkörper als einteilig gesinterter Körper, befindet sich mit den jeweiligen Werkstoffen, insbesondere Wolfram-Carbid-Sinterwerkstoff und Polykristalliner oder Monokristalliner Diamant, in unmittelbarem Kontakt mit dem Sägeseil, das insbesondere gebildet ist durch ein Stahlseil.

Mit einem solchen Verfahren lassen sich Sägeseile auf einfache Weise herstellen, die jedoch eine geometrisch bestimmte Schneide aufweisen und damit niedrigere Schnittgeschwindigkeiten und höhere Zeitspanvolumina und höhere Vorschübe ermöglichen, ohne jedoch Halteelemente beispielsweise aus einem Hartmetall zu verwenden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine quergeschnittene Seitenansicht eines Abschnittes einer Seilsäge mit einem Sägeseil, auf dem ein Schneidelement aufgebracht ist,
- Figur 2: die Ansicht der Seilsäge gemäß Figur 1 mit einer abgewandelten Form des Schneidelementes und mit einem Haltering und
- Figur 3: eine Ansicht eines größeren Abschnittes einer Seilsäge mit einem Sägeseil und einer Mehrzahl von Schneidelementen.

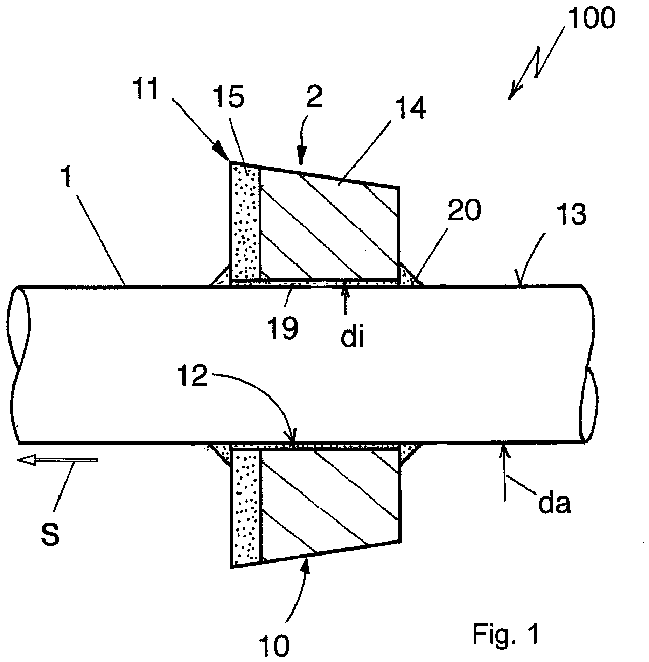

Figur 1 zeigt ein Ausführungsbeispiel einer Seilsäge 100 zum Sägen beispielsweise von Gestein, Beton oder sonstigen Werkstoffen, zur Nutzung etwa für die Natursteinindustrie, für den Rückbau von Betongebäuden und dergleichen, aber auch zum Sägen von beispielsweise metallischen Bauteilen, etwa zur Zerteilung von ausgemusterten Flugzeugrümpfen und dergleichen. Die Seilsäge 100 weist ein Sägeseil 1 auf, das insbesondere mit einem Verschlusselement ringförmig ausgebildet ist und über ein Antriebsrad in einer Schneidrichtung S angetrieben werden kann.

In regelmäßigen Abständen sind auf dem Sägeseil 1 Schneidelemente 2 in Form von Schneidperlen positioniert. Die Schneideelemente 2 können auch einfach in definierten Abständen auf dem Sägeseil 1 angeordnet sein. Die erfindungsgemäße Ausführung der Seilsäge 100 besitzt Schneidelemente 2 mit einem Grundkörper 10, an dem eine geometrisch bestimmte Schneide 11 ausgebildet ist. Dieser ringförmige Grundkörper 10 weist eine zentrale Durchgangsöffnung 12 auf, über die der Grundkörper 10 auf dem Außenumfang 13 des Sägeseils 1 unmittelbar aufgenommen ist.

Der Grundkörper 10 besitzt einen Basiskörper 14 und einen Schneidkörper 15, wobei der Schneidkörper 15 vorderseitig in Schneidrichtung S angeordnet ist. Der Grundkörper 10 ist kegelstumpfförmig ausgebildet und die umlaufende Schneide 11 ist am größeren Durchmesser des Kegelstumpfes angeordnet. Die Schneide 11 kann auch als Polygon gebildet sein. Dabei weist die umlaufende Schneide 11 gerade Abschnitte auf, die in Winkeln aneinander angrenzen.

Zur Bildung eines Ringspaltes 19 ist der Innendurchmesser di der Durchgangsöffnung 12 größer ausgebildet als der Außendurchmesser dₐ des Sägeseils 1. Der dazwischen gebildete Ringspalt 19 ist mit einer Verbindungsmasse 20 aufgefüllt, die beispielsweise gebildet ist durch einen Kunststoffwerkstoff, der mit einem Spritzgussprozess in den Ringspalt 19 eingespritzt wird. Damit wird erreicht, dass der Grundkörper 10, an dem die Schneide 11 unmittelbar ausgebildet ist, direkt auf dem Sägeseil 1 angeordnet ist und zwar ohne Zuhilfenahme weiterer Halteelemente.

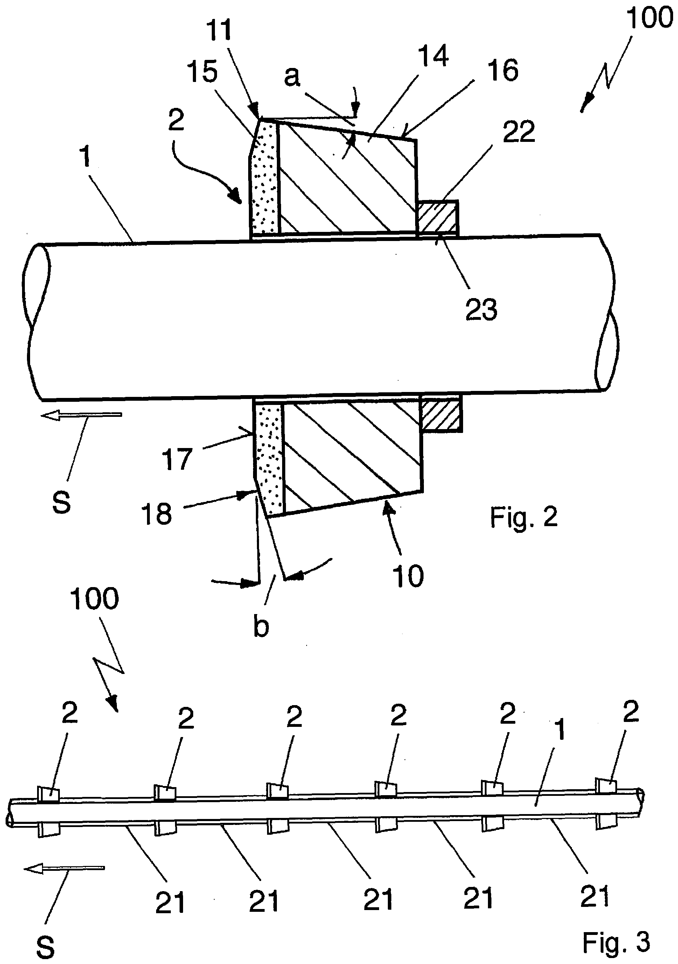

Figur 2 zeigt ein abgewandeltes Ausführungsbeispiel der Seilsäge 100 mit dem Sägeseil 1 und mit dem Schneidelement 2 aus dem Grundkörper 10, bestehend aus dem Basiskörper 14 und dem Schneidkörper 15. Am Grundkörper 10 ist die geometrisch bestimmte Schneide 11 beginnend an einer Frontfläche 17 im Übergang in die Außenumfangsfläche 16 gebildet, und die Frontfläche 17 weist angrenzend an die Schneide 11 eine Fase 18 auf. Die Frontfläche 17 ist als eine Spanfläche ausgebildet und die Außenumfangfläche 16 ist als eine Freifläche ausgebildet. Dabei wird ein Fasenwinkel b der Fase 18 mit einem Wert von 0,1° bis 25° gebildet, wobei der Fasenwinkel b abgetragen wird zwischen der Frontfläche 17 und der Fläche der Fase 18.

Die kegelförmige Außenumfangsfläche weist einen Kegelwinkel a mit einem Wert von beispielsweise 1° bis 12° auf.

Durch die Fase 18 wird ein negativer Schneidwinkel der Schneide 11 gebildet, sodass sich das Schneidelement 2 auf dem Sägeseil 1 insbesondere für das Schneiden von mineralischen Werkstoffen eignet, insbesondere Naturstein oder Beton. Auf der der Schneidrichtung S abgewandten hinteren Seite des Grundkörpers 10 befindet sich ein Haltering 22, der insbesondere mit einer Innenfläche 23 aufweisend ein Gewinde ausgebildet sein kann. Über das Gewinde in der Innenfläche 23 kann der Haltering 22 auf dem Sägeseil 1 positionsfest ausgebracht werden, insbesondere durch zusätzliches Löten oder durch stoffschlüssiges Verbinden, jedoch beispielsweise auch mit einer eingespritzten Kunststoffmasse. Dadurch bildet der Haltering 22 eine Stützwirkung für den Grundkörper 10 aus, sodass dieser seine Position in Schneidrichtung S auf dem Sägeseil 1 nicht ungewollt ändert.

Das dargestellte Schneidelement 2 gemäß der Erfindung ist aus einem einteiligen und frei von Fügeverfahren gebildeten Grundkörper 10 hergestellt, und der Basiskörper 14 weist beispielsweise einen Wolfram-Carbid-Sinterwerkstoff auf und der Schneidkörper 15 weist beispielsweise einen Polykristallinen Diamanten (PKD) oder einen Monokristallinen Diamanten (MKD) als Werkstoff auf. Die Länge des gesamten Grundkörpers 10 beträgt beispielsweise 2mm bis 25mm, bevorzugt 10mm, und der Durchmesser im Bereich der Schneide 11 des Grundkörpers 10 beträgt beispielsweise 7mm bis 12mm, bevorzugt 11mm. Das Sägeseil 1 weist beispielsweise einen Durchmesser von 1mm bis 15mm, bevorzugt von 5mm auf, und der Innendurchmesser di der Durchgangsöffnung 12 weist einen Wert von beispielsweise 5,5mm auf. Damit ist der Innendurchmesser dᵢ beispielsweise etwa 10% größer als der Außendurchmesser da des Sägeseils 1.

Weist die Gesamtlänge des Grundkörpers 10 beispielsweise einen Wert von 10mm auf, so beträgt mit besonderem Vorteil die Dicke des Basiskörpers 10 in Schneidrichtung S etwa nur 1mm. Die verbleibenden 9mm bilden einen hochfesten Basiskörper 14, der als Trägerkörper für den eigentlichen Schneidkörper 15 dient. Auch besteht die Möglichkeit, dass der Grundkörper 10 im Wesentlichen aus dem Basiskörper 14 besteht und der Schneidkörper 15 wird durch ein Abscheideverfahren auf die vorderseitige, aktive Oberfläche des Basiskörpers 14 aufgebracht, beispielsweise aufgesputtert.

Figur 3 zeigt schließlich eine Ansicht der Seilsäge 100 mit einem Sägeseil 1 und mit mehreren Schneidelementen 2. Die Ansicht verdeutlicht noch einmal, dass die Schneidelemente 2 eine Kegelstumpfform aufweisen und so ausgebracht sind, dass diese mit einem größeren Durchmesser in Schneidrichtung S weisen. Zwischen den Schneidelementen 2 befinden sich Hülsenelemente 21, sodass das Sägeseil 1 nicht in direkten Kontakt mit dem Werkstück gelangt.

Die Erfindung beschränkt sich in ihrer Ausführung nicht auf das vorstehend angegebene Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: Seilsäge

- 1: Sägeseil
- 2: Schneidelement

- 10: Grundkörper
- 11: Schneide
- 12: Durchgangsöffnung
- 13: Außenumfang
- 14: Basiskörper
- 15: Schneidkörper
- 16: Außenumfangsfläche
- 17: Frontfläche
- 18: Fase
- 19: Ringspalt
- 20: Verbindungsmasse
- 21: Hülsenelement
- 22: Haltering
- 23: Innenfläche

- da: Außendurchmesser des Sägeseiles
- di: Innendurchmesser der Durchgangsöffnung
- S: Schneidrichtung
- a: Kegelwinkel
- b: Fasenwinkel

## Patentansprüche

1. Seilsäge (100) mit einem Sägeseil (1), auf dem in Abständen zueinander mehrere Schneidelemente (2) angeordnet sind, die einen ringförmigen Grundkörper (10) aufweisen, an dem wenigstens eine geometrisch bestimmte Schneide (11) ausgebildet ist,
**dadurch gekennzeichnet,**
**dass** im ringförmigen Grundkörper (10) eine zentrale Durchgangsöffnung (12) vorgesehen ist, über die der Grundkörper (10) auf dem Außenumfang (13) des Sägeseiles (1) unmittelbar aufgenommen ist.

2. Seilsäge (100) nach Anspruch 1,
**dadurch gekennzeichnet,**
**dass** die Durchgangsöffnung (12) einen Innendurchmesser (di) aufweist, der an den Außendurchmesser (da) des Sägeseiles (1) so angepasst ist, dass der Grundkörper (10) auf dem Außenumfang (13) des Sägeseiles (1) haltend aufgenommen ist.

3. Seilsäge (100) nach Anspruch 1 oder 2,
**dadurch gekennzeichnet,**
**dass** der Grundkörper (10) frei von weiteren Halteelementen auf dem Sägeseil (1) aufgenommen ist.

4. Seilsäge (100) nach einem der Ansprüche 1 bis 3,
**dadurch gekennzeichnet,**
**dass** die Durchgangsöffnung (12) des Sägeseiles (1) einen Innendurchmesser (di) aufweist, der 1% bis 20% und/oder 5% bis 15% und/oder 10% größer ist als der Außendurchmesser (da) des Sägeseiles (1).

5. Seilsäge (100) nach einem der vorgenannten Ansprüche,
**dadurch gekennzeichnet,**
**dass** der Grundkörper (10) einen Basiskörper (14) und einen Schneidkörper (15) aufweist, wobei der Basiskörper (14) und der Schneidkörper (15) den Grundkörper (10) einteilig ausbilden.

6. Seilsäge (100) nach einem der vorgenannten Ansprüche,
**dadurch gekennzeichnet,**
**dass** der Schneidkörper (15) in Schneidrichtung (S) eine kleinere Dicke aufweist als der Basiskörper (14).

7. Seilsäge (100) nach einem der vorgenannten Ansprüche,
**dadurch gekennzeichnet,**
**dass** der Basiskörper (14) eine Härte von wenigstens 1500 HV aufweist und/oder dass der Schneidkörper (15) eine Härte von wenigstens 4500 HV aufweist.

8. Seilsäge (100) nach einem der vorgenannten Ansprüche,
**dadurch gekennzeichnet,**
**dass** der Basiskörper (14) einen Wolfram-Carbid- Sinterwerkstoff aufweist und/oder dass der Schneidkörper (15) einen Polykristallinen Diamanten (PKD) aufweist.

9. Seilsäge (100) nach einem der vorgenannten Ansprüche,
**dadurch gekennzeichnet,**
**dass** der Basiskörper (14) und der Schneidkörper (15) in einem gemeinsamen Sinterprozess hergestellt sind.

10. Seilsäge (100) nach einem der vorgenannten Ansprüche,
**dadurch gekennzeichnet,**
**dass** der ringförmige Grundkörper (10) eine kegelförmige Außenumfangsfläche (16) aufweist und/oder dass der Kegelwinkel (a) der kegelförmigen Außenumfangsfläche (16) einen Wert von 1° bis 12° aufweist.

11. Seilsäge (100) nach einem der vorgenannten Ansprüche,
**dadurch gekennzeichnet,**
**dass** der Grundkörper (10) eine die geometrisch bestimmte Schneide (11) mitbestimmende Frontfläche (17) aufweist, in der angrenzend an die Schneide (11) eine Fase (18) eingebracht ist und/oder dass der Fasenwinkel (b) der Fase (18) zur Frontfläche (17) einen Wert von 0,1° bis 25° aufweist.

12. Verfahren zur Herstellung einer Seilsäge (100) mit einem Sägeseil (1), auf dem in Abständen zueinander mehrere Schneidelemente (2) angeordnet werden, die einen ringförmigen Grundkörper (10) aufweisen, an dem wenigstens eine geometrisch bestimmte Schneide (11) ausgebildet ist, wobei das Verfahren wenigstens die folgenden Schritte aufweist:
- Bereitstellen der Schneidelemente (2) mit einem ringförmigen Grundkörper (10) mit einer zentralen Durchgangsöffnung (12),
- direktes Anordnen der Schneidelemente (2) auf dem Sägeseil (1), sodass die Schneidelemente (2) haltend auf dem Sägeseil (1) aufgenommen sind.

13. Verfahren nach Anspruch 12,
**dadurch gekennzeichnet,**
**dass** der Grundkörper (10) frei von weiteren Halteelementen auf dem Sägeseil (1) angeordnet wird.

14. Verfahren nach Anspruch 12 oder 13,
**dadurch gekennzeichnet,**
**dass** in einem zwischen dem Innendurchmesser (di) der Durchgangsöffnung (12) und dem Außendurchmesser (da) des Sägeseiles (1) gebildeter Ringspalt (19) eine Verbindungsmasse (20) eingespritzt wird, nachdem das Schneidelement (2) auf dem Sägeseil (1) aufgebracht wurde.

15. Verfahren nach einem der Ansprüche 12 bis 14,
**dadurch gekennzeichnet,**
**dass** das Bereitstellen der Schneidelemente (2) mit einem ringförmigen Grundkörper (10) mit einem Sinterverfahren ausgeführt wird, bei dem ein Basiskörper (14) und ein Schneidkörper (15) bei einer Temperatur von 1.200°C bis 1.400°C und zugleich einem Druck von mindestens 4 GPa gemeinsam gesintert werden.
